# EUROPEAN PATENT SPECIFICATION

(11) **EP 4 263 243 B1**
(45) Date of publication and mention of the grant of the patent: **16.04.2025**
(21) Application number: 20851301.0
(22) Date of filing: 18.12.2020
(51) Int. Cl.: B60C 23/00, B29C 73/16, B29L 30/00

(54) **ROTATING JOINT**
DREHDURCHFÜHRUNG
JOINT ROTATIF

(43) Date of publication of application: 25.10.2023
(73) Proprietor: Italian Technology 2018 S.r.l., 00193 Roma (IT)
(72) Inventor: CERRETI, Alfredo, 00193 ROMA (IT); MONTESI, Stefano, 00193 ROMA (IT)
(74) Representative: Garavelli, Paolo
(86) International application number: PCT/IT2020/000087
(87) International publication number: WO 2022/130423

(56) References cited:
- EP-A1- 3 484 731
- WO-A2-2014/063873
- US-A- 4 804 027

## Description

The present invention refers to a rotating joint.

In general, the present invention relates to devices for manual or automatic control of the tire inflation pressure while the vehicle is in motion, that is to say, a rotating joint between the vehicle and the tire.

In particular, the present invention relates to gaskets with a gasket ring expanded or pressed into position by pressure, for example, inflatable gaskets influenced by the pressure inside the element to be sealed.

IT-A-201700092610 relates to a device for inflating and/or repairing a tire while a vehicle is running, the tire having a rim, a hub and a pivot pin on bearings, the device providing means for supplying pressurized air, a pressurized air inlet in the pin/hub/rim assembly, a chamber in the pin/hub/rim assembly. The device comprises a valve 10 sliding on the pin 4, along a direction parallel to an axis of longitudinal extension of the pin 4 itself, following the introduction of the pressurized air into the chamber 8 to abut against the shoulders 12 to prevent the passage of pressurized air towards the bearings 11, and move away from them following the removal of the supply of pressurized air, a channel 13 for the passage of air from the chamber 8 towards the tire 1, and means for detecting the pressure of the tire 1 for activating alarm means, and means for actuating the device following the activation of the alarm means. Furthermore, on the channel 13 for the passage of the pressurized air towards the tire 1, there is a two-way electric valve 14 for diverting air to a tank 16 of repair material, the air exiting the tank 16 mixed with repair product and going to the tire 1.

US-B2-9,649,893 relates to a rotating passage for a compressed air supply system provided between a stator and a rotor rotating with respect to this stator. A compressed air channel arranged in the stator is connected to a compressed air line and leads into an annular chamber formed in the rotor, from which at least one working channel leads to a user. The stator is connected in the region of the rotating bushing to a control line. A frictional moment occurring in the region of the rotating bushing resulting in premature wear is reduced by providing a switchable non-return valve in the annular chamber. Locking elements extending inside the annular chamber concentrically to the axis of rotation of the rotor are movable in an open position by a driving element, which is displaced by the stator in the direction of the locking elements.

DE-B3-1 02015 013 693 relates to a retrofittable annular rotating passage consisting of an inner ring 2 and an outer ring 3. A pair of floating sealing rings 21 and 22, designed to allow multi-axis position displacements between the inner ring 2 and the outer ring 3 up to at least +/- 0.5 mm, without damage creates a precise guide between the inner ring 2 and the outer ring 3. The task is solved by an O-ring gasket with the function of making a compressed air seal and two dirt sealing gaskets.

JP-A-2009-056948 relates to an air pressure supply device including an air pressure source provided in a non-rotating body of the vehicle, capable of supplying air pressure to at least one tire of a plurality of vehicle wheels, the air pressure supply device comprises a rotating seal to ensure the fluid connection between the rotating body which rotates together with the tire and the non-rotating body.

A relevant state of the art is represented by the following patent documents: WO-A2-2014/063873; US-A-4,804,027; EP-A1-3 484 731.

The device of IT201700092610 may present the problem of wear of the valve 10 sliding on the pin 4, during the introduction of pressurized air into the chamber 8, the valve 10 abutting against the shoulders 12 tending to rotate on the pin 4 subjected to a frictional moment which causes wear due to sanding inside the device.

The purpose of the present invention is solving the aforementioned prior art problems by providing a rotating joint free of relative motions of the parts that compose it to avoid the establishment of friction pairs and trigger problems of wear of the material.

Another object is providing a joint which ensures perfect pneumatic sealing of the internal chamber to the rotating joint and at the same time which remains protected from any external atmospheric agent such as dust, water, etc.

A further purpose is diversifying the use of a rotating joint in a split circuit to be able to inflate the tire and, in a further phase, to be able to repair the tire.

A further object is electronically controlling the circuit in which the rotating joint is located in order to be able to transmit data to an external console.

The aforementioned and other purposes and advantages of the invention, which will appear from the following description, are achieved with a rotating joint such as that described in claim 1. Preferred embodiments and non-trivial variants of the present invention form the subject of the dependent claims. It is understood that all the attached claims form an integral part of the present description.

It will be immediately obvious that innumerable variations and modifications (for example relating to shape, dimensions, arrangements and parts with equivalent functionality) can be made to what has been described without departing from the scope of the invention as appears from the attached claims.

The present invention will be better described by some preferred embodiments, provided by way of non-limiting example, with reference to the attached drawings.
Figure 1 shows a sectional view on a plane passing through a main rotation axis in a first configuration of an embodiment of the rotating joint according to the present invention.
Figure 2 shows the same view of the previous figure in section on a plane passing through a main rotation axis in a second configuration of an embodiment of the rotating joint according to the present invention.
Figure 3 shows a sectional view on a plane passing through a main rotation axis in a first variation of an embodiment of the rotating joint according to the present invention.
Figure 4 shows a sectional view on a plane passing through a main rotation axis in a second variation of an embodiment of the rotating joint according to the present invention.
Figure 5 shows a perspective view of a subassembly of an embodiment of the rotating joint according to the present invention.

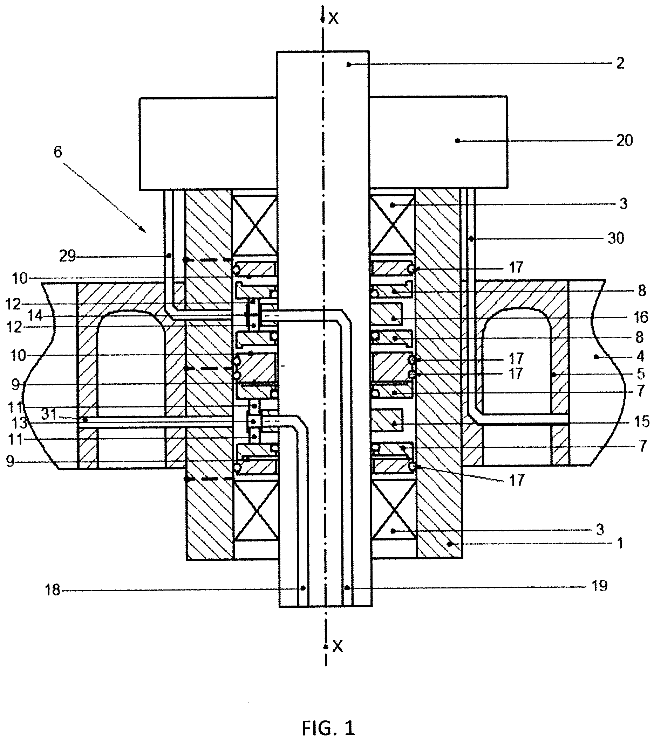

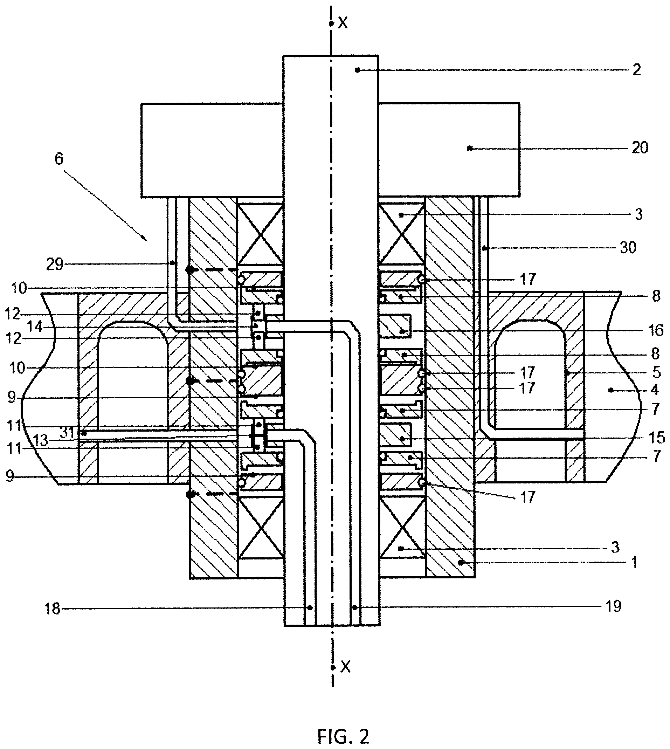

With reference to Figures 1 and 2, it is possible to note that a rotating joint, to allow pressurized air to be fed, through a hub 1, from a rotation pin 2 with respect to an axis XX on bearings 3 to a tire 4 on a rim 5, comprises a distribution spool 6 to prevent the passage of pressurized air through the bearings 3. The distribution spool 6 comprises at least one valve 7, 8, against a respective disc with a first shoulder 9, and a disc with a second shoulder 10.

Advantageously, at least one guiding device consisting of at least one protruding tooth 11, 12 able to slide with respect to a grooved support 13, 14, prevents rotation of the valve 7, 8 with respect to the rotation pin 2.

The valve 7, 8 slides freely along a direction parallel to the X-X axis.

This at least one protruding tooth 11, 12 is integral with the valve 7, 8, while the grooved support 13, 14 is integral with a ring 15, 16.

The ring 15, 16 is keyed or one piece with respect to the rotation pin 2.

The respective disk with a first shoulder 9, disk with a second shoulder 10, coaxial to the valve 7, 8 comprises at least one sealing ring 17 keyed onto a shaped seat of an outer circular edge of the respective first shoulder 9, second shoulder 10.

Such at least one sealing ring 17 presses radially on the internal surface of the hub 1.

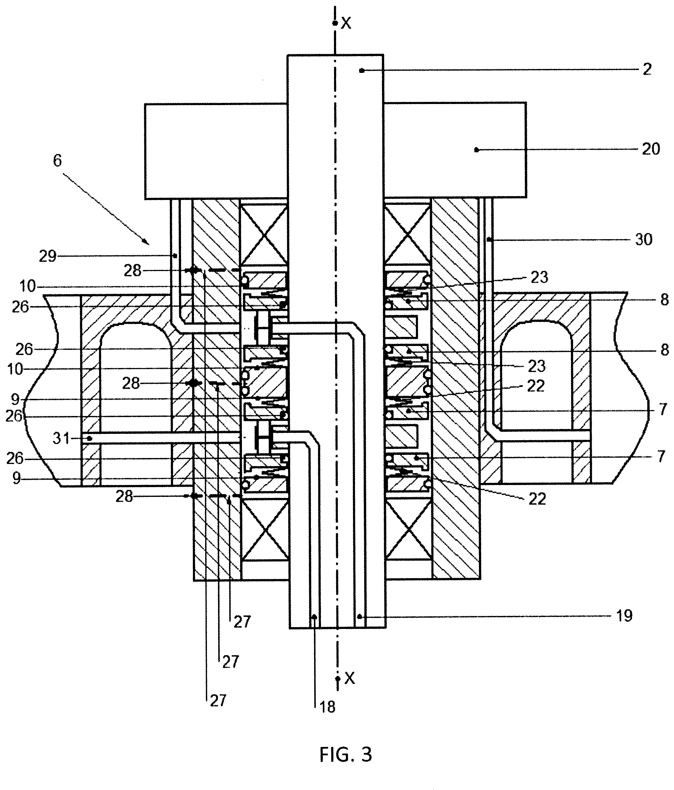

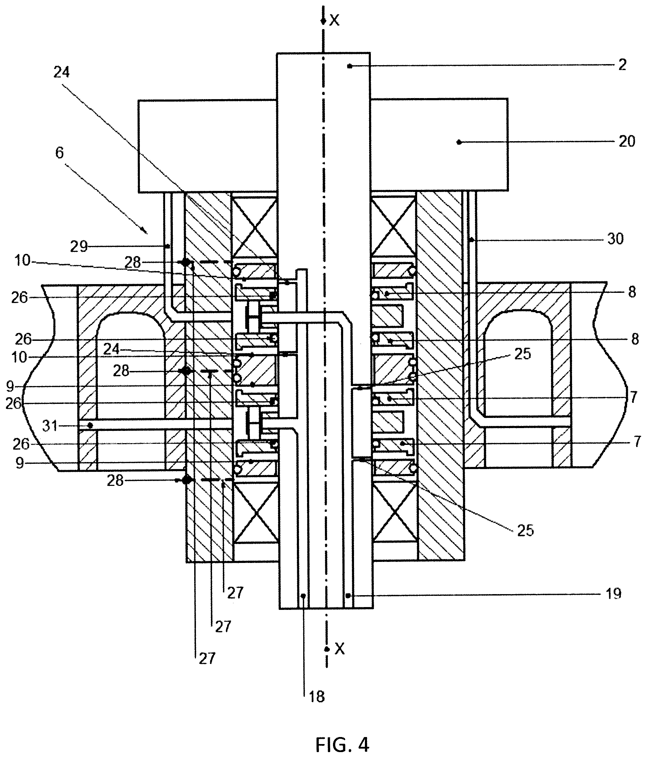

With reference to Figures 3 and 4, the valve 7, 8 comprises at least one sealing ring 26 keyed onto a shaped seat of an internal circular edge of the valve 7, 8.

The sealing ring 26 presses radially on the surface of the rotation pin 2.

The hub 1 comprises a breather channel 27 positioned at the height of this at least one sealing ring 17. The breather channel 27 is adapted to connect the internal surface of the hub 1 with a pneumatic non-return valve 28 positioned on the external surface of the hub 1, to allow the sliding of the valve 7, 8.

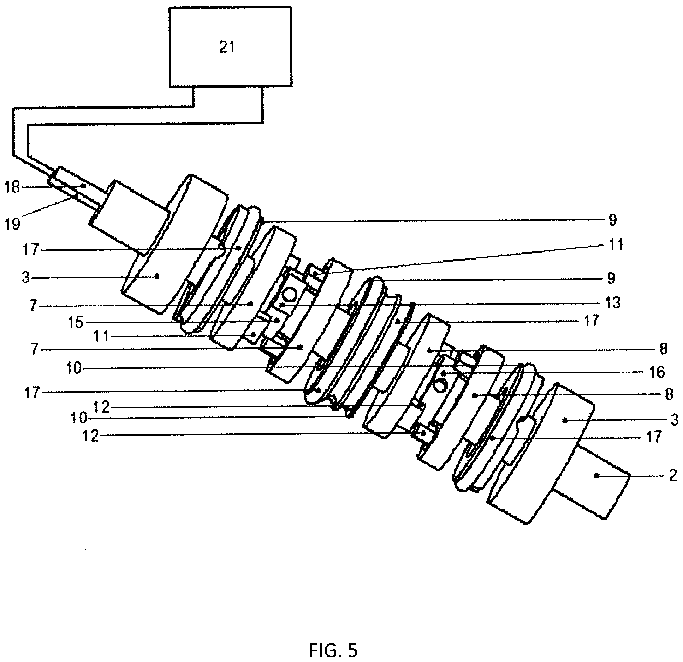

With reference to Figure 5, the pressurized air is fed through a first channel 18, with the valve 7 against the disc with a first shoulder 9, to allow pressurized air to be fed through a tank 20 of repair material carried by the pressurized air.

Alternatively, the pressurized air is fed through a second channel 19, with the valve 8 against the disc with a second shoulder 10, to allow pressurized air to be fed through a tank 20 of repair material transported by pressurized air.

An electronic control unit 21 allows to selectively feed air under pressure through the first channel 18 and the second channel 19.

Preferably, the tank 20 is arranged on the hub 1. Alternatively, the tank 20 is detached from the hub 1 and made inside the rim 5.

The tank 20 is refillable. Alternatively, the tank 20 can be replaced by means of a cartridge.

In a first variation, with reference to Figure 3, this at least one valve 7, 8 is detached from the respective disc with a first shoulder 9, and a disc with a second shoulder 10, by means of elastic return means 22, 23.

In a second variation, referring to Figure 4, such at least one valve 7, 8 is detached from the respective disc with a first shoulder 9, and the disc with a second shoulder 10, by means of supplying pressurized air 24, 25, connected with the respective first channel 18 and second channel 19.

In a further variant, not shown, the respective disk with a first shoulder 9, and the disk with a second shoulder 10, comprises a rotating seal to ensure the sealing of the air under pressure between the respective disk with a first shoulder 9, a disk with a second shoulder 10 and the rotation pin 2. The rotating seal adhering to a temperature sensor connected to the electronic control unit 21 allows to selectively supply pressurized air through the first channel 18 and the second channel 19, continuously or intermittently, depending on the temperature detected and the instantaneous rotation speed measured.

### Examples

The valve 7, 8 slides freely along a direction parallel to the XX axis, guaranteeing pressure tightness as inside it, on the XX axis side, sealing rings 26 are inserted in order to guarantee a perfect tightness to the pressurized air and totally preserve the valve 7, 8, from wear due to sanding.

The passage of the rotating cable only for about 10% of the operating time, in any case corresponds to only a few minutes under pressure, the remaining 90% of the operating time is used to make a seal without pneumatic load and with friction reduced to a minimum. Since the rotating union has to work without maintenance it is necessary to do without lubrication.

Therefore, the seal is almost frictionless against compressed air in the unpressurized state, the O-ring is designed as a floating O-ring. To achieve low coefficients of friction under pressure, the O-ring is not rubber, but a rigid and lubricating plastic is produced. In contrast to floating O-rings, as known in linear moving pneumatic cylinders, the O-ring is brought to its inner diameter with a conical surface, which is preferably a part of the inner ring wall in contact. The groove of the O-ring is significantly greater than the thickness of the O-ring in both width and height. The O-ring preferably has a diameter of about 3 mm. The O-ring can move in a buoyant relationship with the O-ring groove positioned both axially and radially and is applied when pressure is applied to the outward facing seal from the pressure side wall of the O-ring groove, which is preferably a part of the outer ring. The process is not temporarily free of losses, which does not affect the function of the rotating union. Preferably, the inner ring having the tapered surface towards the side wall of the O-ring groove has an angle of inclination with respect to the axis of rotation of the rotating union of at least 10°.

The object of the present invention is an evolution of the device described in document IT201700092610.

The rotating joint comes into operation by moving the valves towards the ends and in contact with the shoulders. The contact between the two elements causes the valves to rotate on the pivot pin, causing wear over time due to smoothing inside the valves.

To overcome this problem, the guiding device was introduced.

The guiding device is constituted by a grooved seat 13, 14, integral with the sliding valve 7, 8, with respect to the protruding tooth 11, 12, integral with a ring 15, 16, keyed or in one piece with respect to the rotation pin, to eliminate the rotation of the valve, eliminating wear due to smoothing thanks to the use of O-rings.

Two channels 18, 19 are formed in the rotation pin of the wheel, with separate and independent inputs, in order to perform two distinct roles: tire inflation only; tire inflation and repair.

In the rotating joint, pressurized air is sent through the two channels 18, 19, selectively. The pressurized air is contained in a tank which is kept charged by a portable mini compressor even if low pressures such as those available at the outlet of the portable mini compressors on the market are required, both the tank and any mini compressor installed on board the vehicle.

The transmission of information and/or signals on the condition of the tire are brought to a control unit with wireless transmission systems through sensors installed on the valves of the tire itself, the data on the condition of the tire are visible to the driver by means of a screen mounted on the vehicle. The activation and deactivation of the inflation and repair functions takes place by means of an electronic system entirely mounted on the vehicle which does not require any electrical contact with the device, rotating joint, thus eliminating all the sliding electrical contacts and the relative rotating means. The system can be activated automatically by the electronic control unit or in second case manually by the driver.

Two procedures are possible.

Inflation of the tire. The first channel 18 passes through the rotation pin, up to approximately one third of the length of the rotation pin, the pressurized air introduced into the first channel 18 enters the portion of the distribution box delimited by the first two shoulders 9. The pressurized air it pushes the valve 7 against the two first shoulders 9 with consequent output of the low pressure air from the channels 27 and from the pneumatic non-return valves 28. In this way, the movement of the valve 7 takes place without any kind of disturbance. The pressurized air enters the tire through a channel 31 equipped with a safety valve.

Tire inflation and repair. Identical valve structure is provided for the second channel, always made inside the rotation pin, on the same side of the first channel, or alternatively, on the opposite side with respect to the first channel through the rotation pin up to about two thirds of the length of the rotation pin.

The pressurized air introduced into the second channel 19 enters the portion of the distribution box delimited by the two second shoulders 10, the valve 8 striking against the two second shoulders allows the introduction of pressurized air into the tank containing the repair liquid through a channel 29 equipped with safety valve. From the tank starts a second channel 30 equipped with a safety valve that allows the injection of repair liquid and pressurized air inside the tire to allow the repair and inflation of the tire. The two second shoulders, on which the valves 8 and the vent channels 27 with the pneumatic non-return valves 28 rest, act in such a way as to avoid that, once the rotating joint is activated, the pressurized air introduced through the second channel can damage the bearings.

The refillable tank with sealant product is fixed around the hub or, in the second case, built inside the rim.

When the inflation and repair procedure is activated, pressurized air enters the tank causing the sealing product to escape from an additional channel downstream of the tank, bringing the pressurized air/repair product mixture to an additional valve on the tire.

The tank was built in a first draft of the project around the hub but it is also possible to build it inside the rim.

## Claims

1. Rotating joint, to allow pressurized air to be fed, through a hub (1), from a rotation pin (2) with respect to an axis (XX) on bearings (3) to a tire (4) on a rim (5), comprising a distribution box (6) to prevent the passage of pressurized air through the bearings (3), said distribution box (6) comprising at least one valve (7, 8), against a respective disc with a first shoulder (9), or a disc with a second shoulder (10), **characterized in that** said rotating joint comprises at least one guiding device consisting of at least one protruding tooth (11, 12) able to slide relative to a grooved support (13, 14) to prevent rotation of the valve (7, 8) with respect to the rotation pin (2), the valve (7, 8) sliding freely along a direction parallel to said axis (XX).

2. Rotating joint according to the previous claim, **characterized in that** said at least one protruding tooth (11, 12) is integral with the valve (7, 8), while said grooved support (13, 14) is integral with a ring (15, 16), said ring (15, 16) keyed or in one piece with respect to the rotation pin (2).

3. Rotating joint according to claim l, **characterized in that** said respective disc with a first shoulder (9), or disc with a second shoulder (10), coaxial to the valve (7, 8) comprises at least one sealing ring (17) keyed on a shaped seat of an outer circular edge of said respective disc with a first shoulder (9), or a disc with a second shoulder (10), said at least one sealing ring (17) pressing radially on the internal surface of the hub (1).

4. Rotating joint according to one of the preceding claims, **characterized in that** the valve (7, 8) comprises at least one sealing ring (26) keyed onto a shaped seat of an inner circular edge of the valve (7, 8), said at least one sealing ring (26) pressing radially on the surface of the rotation pin (2).

5. Rotating joint according to claim 3, **characterized in that** the hub (1) comprises a vent channel (27) positioned at the height of said at least one sealing ring (17), said vent channel (27) adapted to connect the internal surface of the hub (1) with a pneumatic non-return valve (28) positioned on the external surface of the hub (1).

6. Rotating joint according to one of the preceding claims, **characterized in that** it comprises an electronic control unit (21), to allow selectively supplying pressurized air through a first channel (18) and a second channel (19), through a tank (20) of repair material carried by the pressurized air, said first channel (18) with the valve (7) against the disc with a first shoulder (9), and said second channel (19) with the valve (8) against the discwith a second shoulder (10).

7. Rotating joint according to claim 6, **characterized in that** the tank (20) is arranged on the hub (1) or detached from the hub (1) being made inside the rim (5), and **in that** the tank (20) is refillable or replaceable by a cartridge.

8. Rotating joint according to one of the preceding claims, **characterized in that** said at least one valve (7, 8) is detached from said respective disc with a first shoulder (9), or a disc with a second shoulder (10), by means of a spring-back (22, 23).

9. Rotating joint according to claim 6, **characterized in that** said at least one valve (7, 8) is detached from said respective disc with a first shoulder (9), or the disc with a second shoulder (10), by means for supplying pressurized air (24, 25), said means for supplying pressurized air (24, 25) connected to the respective said first channel (18) and said second channel (19).

10. Rotating joint according to claim 3, **characterized in that** said respective disk with a first shoulder (9), or disk with a second shoulder (10), comprises a rotating seal to ensure the sealing of the air under pressure between said respective disk with a first shoulder (9), or the disk with a second shoulder (10) and the rotation pin (2), said rotating seal adhering to a temperature sensor connected to the electronic control unit (21) to allow selectively supplying pressurized air through the first channel (18) and the second channel (19), continuously or intermittently, depending on the detected temperature and the measured instantaneous rotation speed.

## Patentansprüche

1. Drehgelenk, um die Zuführung von Druckluft über eine Nabe (1) von einem Drehzapfen (2) bezüglich einer Achse (XX) auf Lagern (3) zu einem Reifen (4) auf einer Felge zu ermöglichen ( 5), umfassend eine Verteilerschublade (6), um den Durchgang von Druckluft durch die Lager (3) zu verhindern, wobei die Verteilerschublade (6) mindestens ein Ventil (7, 8) aufweist, das an einer jeweiligen Scheibe mit einer ersten Schulter ( 9) oder eine Diskette mit eine zweite Schulter (10), **dadurch gekennzeichnet, dass** das Drehgelenk mindestens eine Führungsvorrichtung umfasst, die aus mindestens einem hervorstehenden Zahn (11, 12) besteht, der in Bezug auf einen gerillten Träger (13, 14) gleiten kann, um eine Drehung des Gelenks zu verhindern Ventil (7, 8) in Bezug auf den Drehstift (2), wobei das Ventil (7, 8) frei entlang einer Richtung parallel zu der Achse (XX) gleitet.

2. Drehgelenk nach dem vorhergehenden Anspruch, **dadurch gekennzeichnet, dass** der mindestens eine vorstehende Zahn (11, 12) fest mit dem Ventil (7, 8) verbunden ist, während der gerillte Träger (13, 14) fest mit einem Ring (15, 16), wobei der Ring (15, 16) mit dem Drehstift (2) verkeilt oder fest verbunden ist.

3. Drehgelenk nach Anspruch 1, **dadurch gekennzeichnet, dass** die jeweilige Scheibe mit einem ersten Absatz (9) bzw. Scheibe mit einem zweiten Absatz (10) koaxial zum Ventil (7, 8) mindestens einen Dichtring (17) aufweist, auf einen geformten Sitz einer äußeren kreisförmigen Kante der jeweiligen Scheibe mit einer ersten Schulter (9) oder Scheibe mit einer zweiten Schulter (10) aufgekeilt ist, wobei der mindestens eine Dichtungsring (17) radial auf die Innenfläche der Scheibe drückt Nabe (1).

4. Drehgelenk nach einem der vorhergehenden Ansprüche, **dadurch gekennzeichnet, dass** das Ventil (7, 8) mindestens einen Dichtring (26) aufweist, der auf einem Formsitz einer inneren kreisförmigen Kante des Ventils (7, 8) aufgekeilt ist. Zumindest ein Dichtring (26) drückt radial auf die Oberfläche des Drehzapfens (2).

5. Drehgelenk nach Anspruch 3, **dadurch gekennzeichnet, dass** die Nabe (1) einen Entlüftungskanal (27) aufweist, der auf der Höhe des mindestens einen Dichtrings (17) positioniert ist, wobei der Entlüftungskanal (27) zur Verbindung mit dem Inneren geeignet ist Oberfläche der Nabe (1) mit einem pneumatischen Rückschlagventil (28), das auf der Außenfläche der Nabe (1) positioniert ist.

6. Drehgelenk nach einem der vorhergehenden Ansprüche, **dadurch gekennzeichnet, dass** es eine elektronische Steuereinheit (21) umfasst, um eine selektive Zufuhr von Druckluft durch einen ersten Kanal (18) und einen zweiten Kanal (19) zu ermöglichen einen Tank (20) mit Reparaturmaterial, das durch die Druckluft transportiert wird, wobei der erste Kanal (18) mit dem Ventil (7) mit einer ersten Schulter (9) an der Scheibe anliegt und der zweite Kanal (19) mit dem Ventil (8) mit einer zweiten Schulter gegen die Scheibe (10).

7. Drehgelenk nach Anspruch 6, **dadurch gekennzeichnet, dass** der Tank (20) an der Nabe (1) angeordnet oder von der Nabe (1) gelöst innerhalb der Felge (5) ausgebildet ist, und dass der Der Tank (20) ist nachfüllbar oder durch eine Kartusche austauschbar.

8. Drehgelenk nach einem der vorhergehenden Ansprüche, **dadurch gekennzeichnet, dass** das mindestens eine Ventil (7, 8) von der jeweiligen Scheibe mit einer ersten Schulter (9) bzw. Scheibe mit einer zweiten Schulter (10) gelöst ist Mittel zur Rückfederung (22, 23).

9. Drehgelenk nach Anspruch 6, **dadurch gekennzeichnet, dass** das mindestens eine Ventil (7, 8) von der jeweiligen Scheibe mit erstem Absatz (9) bzw. Scheibe mit zweitem Absatz (10) gelöst ist Zuführen der Druckluft (24, 25), wobei die versorgungseinrichtung des Drucklufts (24, 25) mit dem jeweiligen ersten Kanal (18) und dem zweiten Kanal (19) verbunden ist.

10. Drehgelenk nach Anspruch 3, **dadurch gekennzeichnet, dass** die jeweilige Scheibe mit einer ersten Schulter (9) oder Scheibe mit einer zweiten Schulter (10) ein rotierendes Dichtelement aufweist, um die Abdichtung der Druckluft zwischen der jeweiligen Scheibe zu gewährleisten mit einer ersten Schulter (9), oder Scheibe mit einer zweiten Schulter (10) und dem Rotationsstift (2), wobei das rotierende Dichtelement das Anhaften an einem mit der elektronischen Steuereinheit (21) verbundenen Temperatursensor ermöglicht selektiv Druckluft durch den ersten Kanal (18) und den zweiten Kanal (19) kontinuierlich oder intermittierend zuzuführen, abhängig von der erfassten Temperatur und der gemessenen momentanen Drehzahl.

## Revendications

1. Joint tournant, pour permettre d'amener de l'air sous pression, via un moyeu (1), depuis un axe de rotation (2) par rapport à un axe (XX) sur roulements (3) vers un pneumatique (4) sur jante (5), comprenant un tiroir de distribution (6) pour empêcher le passage de l'air sous pression à travers les roulements (3), ledit tiroir de distribution (6) comprenant au moins un clapet (7, 8), contre un disque respectif avec un premier épaulement (9), ou un disque avec un deuxième épaulement (10), **caractérisé en ce que** ladite articulation tournante comprend au moins un dispositif de guidage constitué par au moins une dent saillante (11, 12) susceptible de coulisser par rapport à un support rainuré (13, 14) pour empêcher la rotation du soupape (7, 8) par rapport à l'axe de rotation (2), la soupape (7, 8) coulissant librement le long d'une direction parallèle audit axe (XX).

2. Joint tournant selon la revendication précédente, **caractérisé en ce que** ladite au moins une dent saillante (11, 12) est solidaire du clapet (7, 8), tandis que ledit support rainuré (13, 14) est solidaire d'une bague (13, 14). 15, 16), ladite bague (15, 16) clavetée ou solidaire par rapport à l'axe de rotation (2).

3. Joint tournant selon la revendication 1, **caractérisé en ce que** ledit disque respectif avec un premier épaulement (9), ou disque avec un deuxième épaulement (10), coaxial au clapet (7, 8) comprend au moins une bague d'étanchéité (17) calé sur un siège conformé d'un bord circulaire externe dudit disque respectif avec un premier épaulement (9), ou disque avec un deuxième épaulement (10), ladite au moins une bague d'étanchéité (17) appuyant radialement sur la surface interne du moyeu (1).

4. Joint tournant selon l'une des revendications précédentes, **caractérisé en ce que** le clapet (7, 8) comprend au moins une bague d'étanchéité (26) calée sur un siège conformé d'un bord circulaire interne du clapet (7, 8), dite au moins une bague d'étanchéité (26) appuie radialement sur la surface de l'axe de rotation (2).

5. Joint tournant selon la revendication 3, **caractérisé en ce que** le moyeu (1) comprend un canal d'évent (27) positionné à hauteur de ladite au moins une bague d'étanchéité (17), ledit canal d'évent (27) adapté pour relier le surface du moyeu (1) avec un clapet anti-retour pneumatique (28) positionné sur la surface externe du moyeu (1).

6. Joint tournant selon l'une des revendications précédentes, **caractérisé par le fait qu'**il comprend une unité de commande électronique (21), pour permettre une alimentation sélective en air sous pression à travers un premier canal (18) et un deuxième canal (19), à travers un réservoir (20) de matériau de réparation transporté par l'air sous pression, ledit premier canal (18) avec le clapet (7) contre le disque avec un premier épaulement (9), et ledit deuxième canal (19) avec le clapet (8) contre le disque avec une seconde épaule (10).

7. Joint tournant selon la revendication 6, **caractérisé par le fait que** le réservoir (20) est disposé sur le moyeu (1) ou détaché du moyeu (1) en étant réalisé à l'intérieur de la jante (5), et **par le fait que** le le réservoir (20) est rechargeable ou remplaçable à l'aide d'une cartouche.

8. Articulation tournante selon l'une des revendications précédentes, **caractérisée en ce que** ledit au moins un clapet (7, 8) est détaché dudit disque respectif avec un premier épaulement (9), ou disque avec un deuxième épaulement (10), par moyens de rappel élastique (22, 23).

9. Articulation tournante selon la revendication 6, **caractérisée par le fait que** ledit au moins un clapet (7, 8) est désolidarisé dudit disque respectif avec un premier épaulement (9), disque avec un deuxième épaulement (10), au moyen de alimentant l'air sous pression (24, 25), lesdits moyens d'alimentation en air sous pression (24, 25) étant connectés respectivement audit premier canal (18) et audit deuxième canal (19).

10. Joint tournant selon la revendication 3, **caractérisé en ce que** ledit disque respectif avec un premier épaulement (9), ou disque avec un deuxième épaulement (10), comprend un élément d'étanchéité rotatif pour garantir l'étanchéité de l'air sous pression entre ledit disque respectif avec un premier épaulement (9), ou disque avec un deuxième épaulement (10) et l'axe de rotation (2), ledit élément d'étanchéité rotatif adhérant à un capteur de température relié à l'unité de commande électronique (21) pour permettre alimenter sélectivement de l'air sous pression à travers le premier canal (18) et le deuxième canal (19), de manière continue ou intermittente, en fonction de la température détectée et de la vitesse de rotation instantanée mesurée.
